# EUROPÄISCHE PATENTSCHRIFT

(11) **EP 0 862 279 B1**
(45) Veröffentlichungstag und Bekanntmachung des Hinweises auf die Patenterteilung: **06.05.2004**
(21) Anmeldenummer: 98101929.2
(22) Anmeldetag: 04.02.1998
(51) Int. Cl.: H04B 1/48

(54) **Sende-Empfangs-Umschalteanordnung**
Transmit-receive switch
Circuit de commutation émission-réception

(30) Priorität: 04.02.1997 DE 19704151
(43) Veröffentlichungstag der Anmeldung: 02.09.1998
(73) Patentinhaber: Infineon Technologies AG, 81669 München (DE)
(72) Erfinder: Schaffer, Josef-Paul, 81379 München (DE)
(74) Vertreter: Müller - Hoffmann & Partner

(56) Entgegenhaltungen:
- EP-A- 0 446 050
- US-A- 5 513 382

## Beschreibung

Die Erfindung bezieht sich auf eine Sende-Empfangs-Umschalteanordnung, insbesondere auf eine Zweiband-Sende-Empfangs-Umschalteanordnung zum abwechselnden Verbinden von mindestens einer ersten und einer zweiten Empfangseinrichtung und mindestens einer ersten und einer zweiten Sendeeinrichtung mit einem einzigen Signal-Aus/Einkoppelmittel, insbesondere einer Antenne. Die erste Empfangseinrichtung und die erste Sendeeinrichtung sind für ein erstes Frequenzband f1 und die zweite Empfangseinrichtung und die zweite Sendeeinrichtung sind für ein zweites Frequenzband f2 ausgelegt, insbesondere mit f2 ≈ 2*f1.

Derartige Schaltungsanordnungen werden z. B. in vielen Systemen der Telekommunikation benötigt, um im Empfangsmodus eine Empfangseinrichtung und im Sendemodus eine Sendeeinrichtung mit der Antenne oder einem anderen Signal-Aus/Einkoppelmittel zu verbinden. Insbesondere sind hierzu mobile Sende-Empfangsgeräte anzuführen, die zwei verschiedenen Systemen, z.B. GSM und PCN, gerecht werden müssen.

Aus der US 5,193,218 ist ein Sende- Empfangsgerät bekannt, das einen Schalter aufweist, der jeweils über Lambda/Viertel-Leitungen Sender sowie Empfänger an eine gemeinsame Antenne schaltet. Weiterhin ist aus der US 5,513,382 ein derartiger Schaltkreis für ein Funktelefon bekannt, der mittels zweier Dioden und einer Lambda/Viertel-Leitung abwechselnd einen Senderkreis oder einen Empfängerkreis mit einer gemeinsamen Antenne verbindet.

Die Sende-Empfangs-Umschalteanordnungen müssen folgende Anforderungen erfüllen:
- kleine Einfügedämpfung in eingeschaltetem Zustand
- hohe Isolation in ausgeschaltetem Zustand
- hoher Oberwellenabstand
- hohe Intermodulationsfestigkeit
- geringe Stromaufnahme, im Empfangsbetrieb möglichst keine Stromaufnahme

Die Aufgabe der Erfindung besteht darin, eine Sende-Empfangs-Umschalteanordnung der eingangs genannten Art zu entwickeln, die insbesondere eine hohe Intermodulationsfestigkeit aufweist. Sie soll weiterhin im Empfangsmodus nur eine geringe Stromaufnahme zeigen.

Diese Aufgabe wird durch eine Sende-Empfangs-Umschalteanordnung mit den Merkmalen des Patentanspruches 1 gelöst. Vorteilhafte Weiterbildungen der Erfindung sind Gegenstand von Unteransprüchen.

Erfindungsgemäß ist vorgesehen, dass zwischen einem Anschluss für die erste Sendeeinrichtung und einem Anschluss für das Signal-Aus/Einkoppelmittel eine erste Ein-Aus-Schalteinrichtung angeordnet ist,
dass zwischen einem Anschluss für die zweite Sendeeinrichtung und dem Anschluss für das Signal-Aus/Einkoppelmittel eine zweite Ein-Aus-Schalteinrichtung angeordnet ist,
dass zwischen dem Anschluss für das Signal-Aus/Einkoppelmittel und dem Anschluss für die erste Empfangseinrichtung ein erster Leitungsabschnitt und ein mit diesem seriell verbundener zweiter Leitungsabschnitt vorgesehen sind, die derart ausgebildet sind, dass jeder dieser Leitungsabschnitte für das zweite Frequenzband f2 jeweils im wesentlichen eine Lambda-Viertel-Leitung darstellt und der erste Leitungsabschnitt in Reihe geschaltet mit dem zweiten Leitungsabschnitt für das erste Frequenzband f1 im wesentlichen eine Lambda-Viertel-Leitung darstellt,
dass eine dritte Ein-Aus-Schalteinrichtung einerseits zwischen dem ersten und dem zweiten Leitungsabschnitt angeschlossen und andererseits mit einem festen Potential verbunden ist,
dass eine vierte Ein-Aus-Schalteinrichtung einerseits zwischen dem ersten und dem zweiten Leitungsabschnitt angeschlossen und andererseits mit einem Anschluss für die zweite Empfangseinrichtung verbunden ist und
dass eine fünfte Ein-Aus-Schalteinrichtung einerseits an den Anschluss für die erste Empfangseinrichtung angeschlossen ist und andererseits mit einem festen Potential verbunden ist.

Folgende vier Betriebsmoden sind bei dieser Sende-Empfangs-Umschalteanordnung zu unterscheiden:
a)Im Betriebsmodus Senden im ersten Frequenzband f1" sind die erste und die fünfte Ein-Aus-Schalteinrichtung im Ein-Zustand und die restlichen Ein-Aus-Schalteinrichtungen im Aus-Zustand. Somit wird über die fünfte Ein-Aus-Schalteinrichtung die Reihenschaltung aus den beiden Leitungsabschnitten an das feste Potential, bevorzugt an Masse gelegt. Da die Reihenschaltung aus den beiden Leitungsabschnitten für das erste Frequenzband f1 eine Lambda-Viertel-Leitung darstellt, wird der Kurzschluss gegen das feste Potential in einen Leerlauf beim Anschluss für das Signal-Aus/Einkoppelmittel transformiert. In diesem Betriebsmodus ist demzufolge ausschließlich die erste Sendeeinrichtung mit dem Signal-Aus/Einkoppelmittel wirksam verbunden.
b)Im Betriebsmodus "Senden im zweiten Frequenzband f2" sind die zweite und die dritte Ein-Aus-Schalteinrichtung im Ein-Zustand und die restlichen Ein-Aus-Schalteinrichtungen im Aus-Zustand. Über die dritte Ein-Aus-Schalteinrichtung ist der erste Leitungsabschnitt an das feste Potential, bevorzugt an Masse gelegt. Der erste Leitungsabschnitt stellt für das zweite Frequenzband f2 eine Lambda-Viertel-Leitung dar, wodurch der Kurzschluss gegen das feste Potential in einen Leerlauf beim Anschluss für das Signal-Aus/Einkoppelmittel transformiert ist. In diesem Betriebsmodus ist demzufolge ausschließlich die zweite Sendeeinrichtung mit dem Signal-Aus/Einkoppelmittel wirksam verbunden.
c)Im Betriebsmodus "Empfangen im ersten Frequenzband f1" sind sämtliche Ein-Aus-Schalteinrichtungen im Aus-Zustand. Der Anschluss für das Signal-Aus/Einkoppelmittel ist über den ersten und den zweiten Leitungsabschnitt, die in Reihe geschaltet sind, wellenwiderstandsrichtig mit der ersten Sendeeinrichtung für das erste Frequenzband f1 verbunden. Der Rest der Schaltungsanordnung ist abgetrennt.
d) Im letzten der vier möglichen Betriebsmoden Empfangen im zweiten Frequenzband f2" sind die vierte und die fünfte Ein-Aus-Schalteinrichtung im Ein-Zustand und die restlichen Ein-Aus-Schalteinrichtungen im Aus-Zustand. Somit ist die zweite Empfangseinrichtung über den ersten Leitungsabschnitt wellenwiderstandsrichtig mit dem Anschluss für das Signal-Aus/Einkoppelmittel verbunden. Über die fünfte Ein-Aus-Schalteinrichtung ist der zweite Leitungsabschnitt wiederum an das feste Potential, bevorzugt an Masse gelegt. Da der zweite Leitungsabschnitt für das zweite Frequenzband f2 eine Lambda-Viertel-Leitung darstellt, ist der Kurzschluss gegen das feste Potential in einen Leerlauf beim Anschluss für die zweite Empfangseinrichtung transformiert. In diesem Betriebsmodus ist demzufolge ausschließlich die zweite Empfangseinrichtung mit dem Signal-Aus/Einkoppelmittel wirksam verbunden.

Bei einer besonders bevorzugten Ausführungsform sind der erste und der zweite Leitungsabschnitt (SL1,SL2) als Streifenleitungen auf einer Leiterplatte (PCB, Multi-Layer-Platine etc.) ausgebildet. Auf diese Weise läßt sich die erfindungsgemäße Schaltungsanordnung vorteilhafterweise besonders einfach realisieren.

Die Ein-Aus-Schalteinrichtungen sind vorzugsweise mittels Schaltdioden und zugehörigen Stromversorgungsnetzwerken realisiert. Im Ein-Zustand einer Ein-Aus-Schalteinrichtung ist die jeweils zugehörige Schaltdiode leitend geschaltet, im Aus-Zustand sperrend gepolt. Der Energieverbrauch der Schaltungsanordnung ist dadurch vorteilhafterweise äußerst gering.

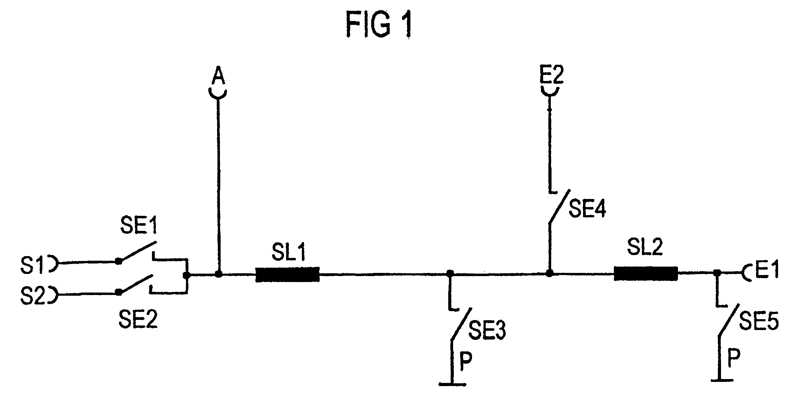

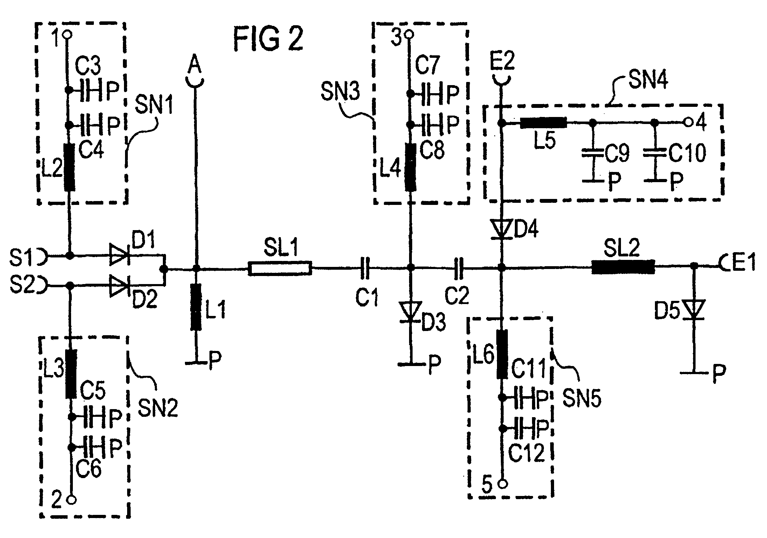

Die erfindungsgemäße Sende-Empfangs-Umschalteanordnung wird im folgenden anhand eines Ausführungsbeispieles in Verbindung mit den Figuren 1 und 2 näher erläutert. Es zeigen:
- Figur 1: eine schematische Darstellung eines Prinzipschaltbildes der erfindungsgemäßen Sende-Empfangs-Umschalteanordnung und
- Figur 2: eine schematische Darstellung des Ausführungsbeispieles.

Gemäß dem Prinzipschaltbild der erfindungsgemäßen Sende-Empfangs-Umschalteanordnung ist zwischen einem Anschluss S1 für eine erste Sendeeinrichtung, die in einem ersten Frequenzband f1 sendet, und einem Anschluss A für eine Antenne (Signal-Aus/Einkoppelmittel) eine erste Ein-Aus-Schalteinrichtung SE1 angeschlossen. Zwischen einem Anschluss S2 für eine in einem zweiten Frequenzband f2 sendende zweite Sendeeinrichtung und dem Anschluss A für die Antenne ist eine zweite Ein-Aus-Schalteinrichtung SE2 angeschlossen.

Der Antennenanschluss A ist weiterhin über einen ersten Leitungsabschnitt SL1 und einen vom Antennenanschluss A aus gesehen diesem nachgeordneten zweiten Leitungsabschnitt SL2 mit einer ersten Empfangseinrichtung E1 für das erste Frequenzband f1 verbunden. Der erste und der zweite Leitungsabschnitt SL1,SL2 sind derart ausgebildet, dass jeder dieser Leitungsabschnitte SL1,SL2 für das zweite Frequenzband f2 im wesentlichen eine Lambda-Viertel-Leitung darstellt und der erste Leitungsabschnitt SL1 in Reihe geschaltet mit dem zweiten Leitungsabschnitt SL2 für das erste Frequenzband f1 im wesentlichen eine Lambda-Viertel-Leitung darstellt. Das zweite Frequenzband f2 weist idealerweise im wesentlichen die doppelte Frequenz des ersten Frequenzbandes f1 auf.

Eine dritte und eine vierte Ein-Aus-Schalteinrichtung SE3,SE4 sind einerseits zwischen dem ersten und dem zweiten Leitungsabschnitt SL1,SL2 angeschlossen und andererseits mit einem festen Potential P, bevorzugt Masse, bzw. mit einem Anschluss E2 für eine zweite Empfangseinrichtung verbunden. Zwischen dem Anschluss E1 für die erste Empfangseinrichtung und dem festen Potential P ist eine fünfte Ein-Aus-Schalteinrichtung (SE5) angeschlossen. In der untenstehenden Tabelle 1 sind die Betriebszustände dieser Sende-Empfangs-Umschaltanordnung zusammengefasst.

Bei dem konkreten Ausführungsbeispiel gemäß Figur 2, das je nach Betriebszustand beispielsweise dem GSM(Global System for Mobile Communications)-System oder dem PCN(Personal Communication Networks)-System gerecht wird (das Frequenzband f2 des PCN-Systems weist im wesentlichen die doppelte Frequenz des Frequenzbandes f1 des GSM-Systems auf), sind die Ein-Aus-Schalteinrichtungen SE1 bis SE5 vorteilhafterweise mittels Dioden D1 bis D5, insbesondere PIN-Dioden, und zugehörigen Stromversorgungsnetzwerken SN1 bis SN5 realisiert. Die Stromversorgungsnetzwerke SN1 bis SN5, von denen jedes einen Steueranschluss 1 bis 5 zum Anlegen eines Ansteuersignals aufweist, dienen zum Schalten der Dioden D1 bis D5 in den "leitend"- oder "sperrend"-Zustand.

In der untenstehenden Tabelle 2 sind die Betriebszustände der Sende-Empfangs-Umschaltanordnung gemäß dem Ausführungsbeispiel zusammengefasst. Im Aus-Zustand der Ein-Aus-Schalteinrichtungen SE1 bis SE5, jeweils bestehend aus einer Diode D1 bis D5 und einem Stromversorgungsnetzwerk SN1 bis SN5, ist beispielsweise an den der jeweiligen Diode D1 bis D5 zugeordneten Steueranschluss 1 bis 5 eine Spannung von -15V gegen Masse angelegt. Im Ein-Zustand fließt beispielsweise ein Durchlassstrom von 10mA (Sendemoden) bzw. 2mA (Empfangsmodus im Frequenzband f2) über die jeweiligen Dioden D1 bis D5. Dies geschieht ebenfalls durch Anlegen einer entsprechenden Spannung an die entsprechenden Steueranschlüsse 1 bis 5.

Die Stromversorgungsnetzwerke SN1 bis SN5 sind beispielsweise herkömmliche in der Mobilfunktechnik verwendete Stromversorgungsnetzwerke, bestehend aus Kapazitäten C3 bis C12 und Induktivitäten L2 bis L6, für Schaltdioden und werden von daher an dieser Stelle nicht näher erläutert. Die Kapazitäten C1 und C2 dienen zum gleichstrommäßigen Abtrennen der Ein-Aus-Schalteinrichtung SE3, bestehend aus dem Stromversorgungsnetzwerk SN3 und der Diode D3, von den Leitungsabschnitten SL1,SL2 und die Induktivität L1 dient zum hochfrequenzmäßigen Abtrennen der Masse P vom Antennenanschluß A und den Sendeeinrichtungsanschlüssen S1,S2.

Anstelle der Dioden D1 bis D5 mit Stromversorgungsnetzwerken SN1 bis SN5 können beispielsweise auch Transistoranordnungen oder andere Schaltungsanordnungen als Ein-Aus-Schalteinrichtungen SE1 bis SE5 verwendet sein. Die erfindungsgemäße Sende-Empfangs-Umschalteanordnung ist demzufolge selbstverständlicherweise nicht auf des oben beschriebene Ausführungsbeispiel eingeschränkt.

Die Funktionseigenschaften der oben beschriebenen Zweiband-Sende-Empfangs-Umschaltanordnung können vorteilhafterweise mittels konventioneller Anpassglieder, z.B. in Streifenleitertechnik oder diskreten LC-Schaltungen usw., an den Anschlüssen S1,S2,E1,E2,A weiter verbessert werden. Werden die Sende- und Empfangseinrichtungen über geeignete Filter (z. B. SAW-Filter, Streifenleitungsfilter, LC-Filter...) mit der Sende-Empfangs-Umschalteanordnung verbunden, können deren Isolations- und Intermodulationseigenschaften weiter verbessert werden.

Vorteilhafterweise ist bei der erfindungsgemäßen Sende-Empfangs-Umschaltanordnung im Sendefall die Intermodulation sehr gering, da nicht alle jeweils sperrenden Schaltdioden D2 bis D4 bzw. D1, D4 und D5 unmittelbar parallel zur HF-Leistung liegen. Außerdem verbraucht die Sende-Empfangs-Umschaltanordnung im Empfangsmodus vorteilhafterweise äußerst wenig elektrische Energie, wodurch inbesondere bei Mobiltelefonen die Stromversorgungs-Akkus geschont werden.

**Tabelle 1**

| **Betriebsmodus** | **Zustand der Ein-Aus-Schalteinrichtung** | | | | | **Erläuterung der** **Funktionsweise** |
|---|---|---|---|---|---|---|
| | **SE1** | **SE2** | **SE3** | **SE4** | **SE5** | |
| Senden im ersten Frequenzband f1 | Ein | Aus | Aus | Aus | Ein | Sendemodus für das niedrigerfrequente erste Frequenzband f1. Die beiden Lamda-Viertel-Leitungen SL1,SL2 für f2 bilden miteinander eine Lamda-Viertel-Leitung für f1 (da f2 ≈ 2*f1). Der Kurzschluss gegen Masse P durch SE5 wird dadurch in einen Leerlauf beim Antennenanschluss A transformiert. |
| Senden im zweiten Frequenzband f2 | Aus | Ein | Ein | Aus | Aus | sendemodus für das höherfrequente Frequenzband f2. Die Lamda-Viertel-Leitung SL1 für f2 zwischen SE3 und Antennenanschluss A transformiert den Kurzschluss über S3 gegen Masse P in einen Leerlauf am Antennenanschluss A. |
| Empfangen im ersten Frequenzband f2 | Aus | Aus | Aus | Aus | Aus | Der Empfänger E1 für das erste Frequenzband f1 ist über die beiden Lamda-Viertel-Leitungen SL1,SL2 wellenwiderstandsrichtig mit dem AntennenAnschluss A verbunden. |
| Empfangen im zweiten Frequenzband f2 | Aus | Aus | Aus | Ein | Ein | Der Empfänger E2 für das zweite Frequenzband f2 ist über die Lamda-Viertel-Leitung SL1 wellenwiderstandsrichtig mit dem AntennenAnschluss A verbunden. Der Kurzschluss durch S5 gegen Masse P wird durch die Lamda-Viertel-Leitung für f2 in einen Leerlauf am Anschluss E2 für den zweiten Empfänger transformiert. |

**Tabelle 2:**

| **Betriebsmodus** | **Schaltzustand am Steueranschluss:** | | | | | **Bemerkungen/Messergebnisse (gemessen mit einer HF-Leistung von 28 dBm)** |
|---|---|---|---|---|---|---|
| | **1** | **2** | **3** | **4** | **5** | |
| Senden im ersten Frequenzband f1 | 10 mA | -15 V | -15 V | -15 V | 10 mA | 0,5 dB Einfügedämpfung Harmonische mit 71 dB Abstand IP3 am Ausgang: 50 dBm |
| Senden im zweiten Frequenzband F2 | -15 V | 10 mA | 10 mA | -15 V | -15 V | 0,5 dB Einfügedämpfung Harmonische mit 71 dB Abstand |
| Empfangen im ersten Frequenzband f1 (GSM) | -15 V | -15 V | -15 V | -15 V | -15 V | 0,5 dB Einfügedämpfung Im wesentlichen kein Stromverbrauch! Nur Sperrstrom der Dioden D1...D5. |
| Empfangen im zweiten Frequenzband f2 (PCN) | -15 V | -15 V | -15 V | 2 mA (D4, D5 leitend) | offen | 0,67 dB Einfügedämpfung Wenig Stromverbrauch! |

## Patentansprüche

1. Sende-Empfangs-Umschalteanordnung zum abwechselnden Verbinden von mindestens einer ersten und einer zweiten Empfangseinrichtung und mindestens einer ersten und einer zweiten Sendeeinrichtung mit einem einzigen Signal-Aus/Einkoppelmittel, insbesondere einer Antenne, wobei die erste Empfangseinrichtung und die erste Sendeeinrichtung für ein erstes Frequenzband f1 und die zweite Empfangseinrichtung und die zweite Sendeeinrichtung für ein zweites Frequenzband f2 ausgelegt sind,
**dadurch gekennzeichnet,**
**dass** zwischen einem Anschluss (S1) für die erste Sendeeinrichtung und einem Anschluss (A) für das Signal-Aus/Einkoppelmittel eine erste Ein-Aus-Schalteinrichtung (SE1) angeordnet ist,
**dass** zwischen einem Anschluss (S2) für die zweite Sendeeinrichtung und dem Anschluss (A) für das Signal-Aus/Einkoppelmittel eine zweite Ein-Aus-Schalteinrichtung (SE2) angeordnet ist,
**dass** zwischen dem Anschluss (A) für das Signal-Aus/Einkoppelmittel und einem Anschluss (E1) für die erste Empfangseinrichtung ein erster Leitungsabschnitt (SL1) und ein mit diesem seriell verbundener zweiter Leitungsabschnitt (SL2) vorgesehen ist,
**dass** der erste (SL1) und der zweite Leitungsabschnitt (SL2) derart ausgebildet sind, dass jeder dieser Leitungsabschnitte (SL1,SL2) für das zweite Frequenzband f2 im wesentlichen eine Lambda-Viertel-Leitung darstellt und der erste Leitungsabschnitt (SL1) in Reihe geschaltet mit dem zweiten Leitungsabschnitt (SL2) für das erste Frequenzband f1 im wesentlichen eine Lambda-Viertel-Leitung darstellt,
**dass** eine dritte Ein-Aus-Schalteinrichtung (SE3) einerseits zwischen dem ersten (SL1) und dem zweiten Leitungsabschnitt (SL2) angeschlossen ist und andererseits mit einem Anschluss für ein festes Potential (P) verbunden ist,
**dass** eine vierte Ein-Aus-Schalteinrichtung (SE4) einerseits zwischen dem ersten (SL1) und dem zweiten Leitungsabschnitt (SL2) angeschlossen ist und andererseits mit einem Anschluss (E2) für die zweite Empfangseinrichtung verbunden ist und
**dass** eine fünfte Ein-Aus-Schalteinrichtung (SE5) einerseits zwischen dem zweiten Leitungsabschnitt (SL2) und dem Anschluss (E1) für die erste Empfangseinrichtung angeschlossen ist und andererseits mit dem Anschluss für das feste Potenti-. al (P) verbunden ist.

2. Sende-Empfangs-Umschalteanordnung nach Anspruch 1,
**dadurch gekennzeichnet, dass**
der erste und der zweite Leitungsabschnitt (SL1,SL2) als Streifenleitungen auf einer Leiterplatte ausgebildet sind.

3. Sende-Empfangs-Umschalteanordnung nach Anspruch 1 oder 2,
**dadurch gekennzeichnet, dass**
das zweite Frequenzband f2 etwa die doppelte Frequenz aufweist wie das erste Frequenzband f1.

4. Sende-Empfangs-Umschalteanordnung nach einem der Ansprüche 1 bis 3,
**dadurch gekennzeichnet, dass**
jeder der Ein-Aus-Schalteinrichtungen (SE1,SE2,SE3,SE4,SE5) mindestens eine Diode (D1,D2,D3,D4,D5) zugeordnet ist, die im eingeschalteten Zustand der jeweiligen Ein-Aus-Schalteinrichtung (SE1,SE2,SE3,SE4,SE5) in Durchlassrichtung gepolt ist.

5. Sende-Empfangs-Umschalteanordnung nach einem der Ansprüche 1 bis 4,
**dadurch gekennzeichnet, dass**
zwischen den Anschlüssen (S1,S2,E1,E2) für die erste und/oder die zweite Sendeeinrichtung und/oder für die erste und/oder die zweite Empfangseinrichtung jeweils ein Filter zur Verbesserung der Isolations- und Intermodulationseigenschaften vorgesehen ist.

## Claims

1. Transmitting/receiving switching arrangement for alternate connection of at least a first and a second receiving device and at least a first and a second transmitting device to a single signal output/input means, in particular an antenna, with the first receiving device and the first transmitting device being designed for a first frequency band f1, and the second receiving device and the second transmitting device being designed for a second frequency band f2,
**characterized**
**in that** a first on/off switching device (SE1) is arranged between a connection (S1) for the first transmitting device and a connection (A) for the signal output/input means,
**in that** a second on/off switching device (SE2) is arranged between a connection (S2) for the second transmitting device and the connection (A) for the signal output/input means,
**in that** a first line section (SL1) and a second line section (SL2), which is connected in series with it, are provided between the connection (A) for the signal output/input means and a connection (E1) for the first receiving device,
**in that** the first line section (SL1) and the second line section (SL2) are designed such that each of these line sections (SL1, SL2) essentially represents a quarter lambda line for the second frequency band f2, and the first line section (SL1) connected in series with the second line section (SL2) essentially represents a quarter lambda line for the first frequency band f1,
**in that** a third on/off switching device (SE3) is on the one hand connected between the first line section (SL1) and the second line section (SL2), and on the other hand is connected to a connection for a fixed potential (P),
**in that** a fourth on/off switching device (SE4) is on the one hand connected between the first line section (SL1) and the second line section (SL2), and on the other hand is connected to a connection (E2) for the second receiving device, and
**in that** a fifth on/off switching device (SE5) is on the one hand connected between the second line section (SL2) and the connection (E1) for the first receiving device, and on the other hand is connected to the connection for the fixed potential (P).

2. Transmitting/receiving switching arrangement according to Claim 1,
**characterized in that**
the first line section (SL1) and the second line section (SL2) are in the form of striplines on a printed circuit board.

3. Transmitting/receiving switching arrangement according to Claim 1 or 2,
**characterized in that**
the second frequency band f2 is at approximately twice the frequency of the first frequency band f1.

4. Transmitting/receiving switching arrangement according to one of Claims 1 to 3,
**characterized in that**
each of the on/off switching devices (SE1, SE2, SE3, SE4, SE5) has at least one associated diode (D1, D2, D3, D4, D5), which is forward-biased when the respective on/off switching device (SE1, SE2, SE3, SE4, SE5) is in the switched-on state.

5. Transmitting/receiving switching arrangement according to one of Claims 1 to 4,
**characterized in that**
a filter is in each case provided between the connections (S1, S2, E1, E2) for the first and/or the second transmitting device and/or for the first and/or the second receiving device, in order to improve the isolation and intermodulation characteristics.

## Revendications

1. Circuit de commutation émission-réception de liaison en alternance d'au moins un premier et un deuxième dispositifs de réception et d'au moins un premier et un deuxième dispositifs d'émission par un moyen unique de sortie/entrée de signal, notamment d'une antenne, le premier dispositif de réception et le premier dispositif d'émission étant conçus pour une première bande f1 de fréquence et le deuxième dispositif de réception et le deuxième dispositif d'émission pour une deuxième bande f2 de fréquence,
**caractérisé en ce qu'**un dispositif (SE1) de connexion-déconnexion est monté entre une borne (S1) pour le premier dispositif d'émission et une borne (A) pour le moyen de sortie/entrée du signal,
**en ce qu'**un deuxième dispositif (SE2) de connexion-déconnexion est monté entre une borne (S2) pour le deuxième dispositif d'émission et la borne (A) pour le moyen de sortie/entrée du signal,
**en ce qu'**il est prévu, entre la borne (A) pour le moyen de sortie/entrée du signal et une borne (E1) pour le premier dispositif de réception, un premier tronçon (SL1) de ligne et un deuxième tronçon (SL2) de ligne relié à celui-ci en série,
**en ce que** le premier (SL1) et le deuxième (SL2) tronçons de ligne sont constitués de façon à ce que chacun de ces tronçons (SL1, SL2) de ligne représente pour la deuxième bande f2 de fréquence sensiblement une ligne quart d'onde et le premier tronçon (SL1) de ligne monté en série avec le deuxième tronçon (SL2) de ligne représente pour la première bande f1 de fréquence sensiblement une ligne quart d'onde,
**en ce qu'**un troisième dispositif (SE3) de connexion-déconnexion est raccordé, d'une part, entre le premier (SL1) et le deuxième (SL2) tronçons de ligne et est relié, d'autre part, à une borne pour un potentiel (P) fixe,
**en ce qu'**un quatrième dispositif (SE4) de connexion-déconnexion, d'une part, est raccordé entre le premier(SL1) et le deuxième (SL2) tronçons de ligne et, d'autre part, est relié à une borne (E2) pour le deuxième dispositif de réception, et
**en ce qu'**un cinquième dispositif (SE5) de connexion-déconnexion, d'une part, est raccordé entre le deuxième tronçon (SL2) de ligne et la borne (E1) pour le premier dispositif de réception et, d'autre part, est relié à la borne pour le potentiel (P) fixe.

2. Circuit de commutation émission-réception suivant la revendication 1, **caractérisé en ce que** le premier et le deuxième tronçons (SL1, SL2) de ligne sont constitués en lignes à ruban sur une plaquette à circuit imprimé.

3. Circuit de commutation émission-réception suivant la revendication 1 ou 2, **caractérisé en ce que** la deuxième bande f2 de fréquence a à peu près une fréquence double de celle de la première bande f1 de fréquence.

4. Circuit de commutation émission-réception suivant l'une des revendications 1 à 3, **caractérisé en ce que**, à chacun des dispositifs (SE1, SE2, SE3, SE4, SE5) de connexion-déconnexion est associé au moins une diode (D1, D2, D3, D4, D5) qui en l'état connecté du dispositif (SE1, SE2, SE3, SE4, SE5) respectif de connexion-déconnexion est polarisé dans le sens passant.

5. Circuit de commutation émission-réception suivant l'une des revendications 1 à 4, **caractérisé en ce qu'**il est prévu entre les bornes (S1, S2, E1, E2) pour le premier et/ou le deuxième dispositif d'émission et/ou pour le premier et/ou le deuxième dispositif de réception respectivement un filtre d'amélioration des propriétés d'isolation et d'intermodulation.
